# EUROPEAN PATENT APPLICATION

(11) **EP 4 653 825 A1**
(43) Date of publication of application: **26.11.2025**
(21) Application number: 25171813.6
(22) Date of filing: 22.04.2025
(51) Int. Cl.: G01F 23/00, G01F 23/2965

(54) **NON-CONTACT LEVEL SWITCH**

(30) Priority: 24.05.2024 IN 202411040526
(71) Applicant: Honeywell International Inc., Charlotte, NC 28202 (US)
(72) Inventor: KISHORE, Kuna Venkat Satya Rama, Charlotte, 28202 (US)
(74) Representative: Haseltine Lake Kempner LLP

(57) **Abstract**

A device for determining the level and/or direction of various media is provided. A level switch may detect, respond to, and/or control levels and/or overfilling of various media, such as fluids, solids, powders, granules, and/or other materials comprised within a container. A level switch may include a housing, a force sensor comprising a substantially spherical component protruding through an opening of the housing (wherein the force sensor is mechanically coupled to the housing), a force pulse generator configured to impinge a force pulse of a chosen force and pulse width onto a surface of a container (wherein the force pulse generator is mechanically coupled to the housing), and/or a printed circuit board assembly (PCBA) (wherein the PCBA is mechanically coupled to the housing).

## Description

### FIELD OF THE INVENTION

Embodiments of the present disclosure generally relate to devices comprising non-contact level switches.

### BACKGROUND

Prevention of over-filling and/or under-filling of containers, particularly of industrial tanks, is critical. There are many different devices for measuring fluid levels in containers. However, some existing devices present many challenges. For example, some level sensors only monitor continuous fluid levels. In another example, some optical level sensors maintain contact with the fluid being measured. Applicant has identified many technical challenges and difficulties associated with such devices for level detection. Through applied effort, ingenuity, and innovation, many of these identified problems have been solved by developing solutions that are included in embodiments of the present disclosure, many examples of which are described in detail herein.

### BRIEF SUMMARY

Various example embodiments described herein relate to devices comprising non-contact level switches.

In accordance with various embodiments of the present disclosure, a method is provided. In some embodiments, the method is a method for detecting presence and direction of a material is provided. In some embodiments, a force pulse of a force and pulse width is applied to a surface of a container. In some embodiments, a damped signal detected by a force sensor in response to the force pulse is processed, wherein the processing comprises extracting a first amplitude peak and a second amplitude peak, the first amplitude peak corresponding to a first time and a second time, and the second amplitude peak corresponding to the first time and the second time. In some embodiments, a determination is made regarding whether an absolute value of a difference of the first amplitude peak at the first time and the first amplitude peak at the second time is greater than one half of the first amplitude peak at the first time. In some embodiments, a determination is made, based on the first amplitude peak at the first time being less than the first amplitude peak at the second time and based on the second amplitude peak at the first time being less than the second amplitude peak at the second time, regarding presence of the material in the container. In some embodiments, a determination is made, based on the difference of the first amplitude peak at the first time and the first amplitude peak at the second time being greater than zero, that the container is emptying. In some embodiments, based on determining that the container is emptying, a signal indicating to stop emptying the container is transmitted.

In some embodiments, the determining whether the absolute value of the difference of the first amplitude peak at the first time and the first amplitude peak at the second time is greater than one half of the first amplitude peak at the first time comprises determining whether a state of the material is changing.

In some embodiments, the determining presence of the material in the container comprises determining whether the material is present or absent.

In some embodiments, the determining that the container is emptying comprises determining the direction of the material relative to the container.

In some embodiments, the method further comprises determining that the container is filling.

In some embodiments, the transmitting a signal indicating to stop emptying the container further comprises transmitting a signal indicating to stop filling the container.

In accordance with various embodiments of the present disclosure, a device is provided. In some embodiments, the device is a level switch. In some embodiments, the level switch comprises: a housing; a force sensor mechanically coupled to the housing, the force sensor comprising a substantially spherical component protruding through an opening of the housing; a force pulse generator, wherein the force pulse generator is mechanically coupled to the housing and disposed axially from the force sensor, wherein the force pulse generator is configured to impinge a force pulse of a chosen force and pulse width onto a surface of a container; and a printed circuit board assembly (PCBA), wherein the PCBA is mechanically coupled to the housing.

In some embodiments, the force sensor is soldered to the PCBA.

In some embodiments, the force pulse generator is comprised of at least one of: an electromagnetic device; or a piezoelectric device.

In some embodiments, the force pulse generator is coupled to the PCBA via soldered leads.

In some embodiments, the PCBA comprises: a pulse generator configured to drive a piezoelectric device or electromagnetic solenoid; an amplifier configured to read incoming signals; a micro-controller unit (MCU) configured to process the incoming signals and determine a level and direction of a material; and a switch configured to communicate the level and the direction of the material.

In accordance with various embodiments of the present disclosure, a system is provided. In some embodiments, the system comprises a container for a material. In some embodiments, the system comprises a level switch coupled to the container. In some embodiments, the level switch comprises: a housing; a force sensor mechanically coupled to the housing, the force sensor comprising a substantially spherical component protruding through an opening of the housing; a force pulse generator, wherein the force pulse generator is mechanically coupled to the housing and disposed axially from the force sensor, wherein the force pulse generator is configured to impinge a force pulse of a chosen force and pulse width onto a surface of a container; and a printed circuit board assembly (PCBA), wherein the PCBA is mechanically coupled to the housing.

In some embodiments, the level switch is coupled to the container on a side of the container opposite the material.

In some embodiments, the force sensor is soldered to the PCBA.

In some embodiments, the force pulse generator is comprised of at least one of: an electromagnetic device; or a piezoelectric device.

In some embodiments, the force pulse generator is coupled to the PCBA via soldered leads.

In some embodiments, the PCBA comprises: a pulse generator configured to drive a piezoelectric device or electromagnetic solenoid; an amplifier configured to read incoming signals; a micro-controller unit (MCU) configured to process the incoming signals and determine a level and direction of a material; and a switch configured to communicate the level and the direction of the material.

In some embodiments, the level switch is coupled to the container via an adhesive material.

In some embodiments, the level switch is coupled to the container via one or more fasteners.

In some embodiments, the system comprises a gel disposed between the level switch and the container.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A is a front view of a non-contact level switch;
FIG. 1B is a cross-sectional view of a non-contact level switch;
FIG. 1C is a perspective view of a force sensing element;
FIG. 2 is a cross-sectional view of a container with a non-contact level switch;
FIG. 3A is a cross-sectional view of a first partially filled container with a non-contact level switch and a blown-up view of their interface;
FIG. 3B is a cross-sectional view of a second partially filled container with a non-contact level switch and a blown-up view of their interface;
FIG. 4 shows example views of a force pulse and a damped force pulse; and
FIG. 5 is an example flowchart illustrating an example method of determining level and direction of a material in a container, in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically coupled," "electrically coupling," "electrically couple," "electrically connected," "electrically connecting," "electrically connect," "in communication with," or "in electronic communication with" in the present disclosure refers to two or more elements or components being connected through wired means and/or wireless means, such that signals, electrical voltage/current, data and/or information may be transmitted to and/or received from these elements or components.

The term "in fluid communication with" in the present disclosure refers to two or more elements or components being connected through one or more paths or pathways, such that a fluid or other flowing media may be input to and/or output from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

The term "sensor" refers to a component that may detect, measure, and/or identify any one or more attributes or characteristics of an environment or media, including but not limited to level(s), force(s), and/or pressure(s).

The term "non-contact" refers to two or more elements or components not being in direct contact with one another. For example, a sensor may not be in contact with media being measured by the sensor.

The term "switch" refers to a component and/or a device comprising a component that may communicate and/or transmit data indicating characteristics of media being measured to one or more components and/or devices.

In some examples, level sensors (e.g., sensors that measure a level of a fluid or material within a container) are limited by various features. For example, some level sensors monitor continuous fluid levels but lack the characteristics of point level switches, including but not requiring contact with the material being measured, being external to the container of the material being measured, and/or being configurable at given locations irrespective of the type of container material and the type of material being measured. Some optical-based level sensors, for example, rely on direct contact with the fluid being measured via holes in the tank housing the fluid. In some examples, mechanical float switches and/or magnetic level switches have limited application usage because some example level sensors also do not measure powders, granules, and/or solids.

Embodiments of the present disclosure, in some examples, provide devices comprising non-contact level switches which are external to containers housing media to be measured.

Example embodiments of the methods described herein may include applying a force pulse of a force and pulse width to a surface of a container. For example, the container may include a tank configured to contain fluids, solids, granules, powders, and/or other materials. For example, a surface of the container may be an outer wall of the container. Example embodiments of the methods described herein may include processing a damped signal detected by a force sensor in response to the force pulse, wherein the processing comprises extracting a first amplitude peak and a second amplitude peak, the first amplitude peak corresponding to a first time and a second time, and the second amplitude peak corresponding to the first time and the second time. The damped signal may be a signal that is damped as a result of contact with a material. For example, a signal may be impinged onto a surface of a container, and the signal may reflect off of a material contained within the container (e.g., such as a fluid). Based on the signal coming into contact with the fluid, the signal will become damped proportionally to the material with which it made contact.

Example embodiments of the methods described herein may include determining whether an absolute value of a difference of the first amplitude peak at the first time and the first amplitude peak at the second time is greater than one half of the first amplitude peak at the first time. For example, if the difference of the first amplitude peak at the first time and the first amplitude peak at the second time is greater than one half of the first amplitude peak at the first time, then a change of state may be detected in the material. A change of state may indicate that the material in the container changes from a state of full to empty (e.g., the container is emptying, draining, or otherwise changing) and/or from a state of empty to full (e.g., the container is filling) at the two successive measurement times. For example, however, if the difference of the first amplitude peak at the first time and the first amplitude peak at the second time is not greater than one half of the first amplitude peak at the first time, then a change of state may not be detected in the material. A lack of change of state may indicate that the container remains full and/or remains empty at the two successive measurement times.

Example embodiments of the methods described herein may include determining, based on the first amplitude peak at the first time being less than the first amplitude peak at the second time and based on the second amplitude peak at the first time being less than the second amplitude peak at the second time, presence of the material in the container. For example, the material may be detected to be present in the container if the first amplitude peak at the first time is less than the first amplitude peak at the second time and the second amplitude peak at the first time is less than the second amplitude peak at the second time. For example, the material may be detected to be absent from the container if the first amplitude peak at the first time is not less than the first amplitude peak at the second time and/or the second amplitude peak at the first time is not less than the second amplitude peak at the second time.

Example embodiments of the methods described herein may include determining, based on the difference of the first amplitude peak at the first time and the first amplitude peak at the second time being greater than zero, that the container is emptying. For example, if the difference of the first amplitude peak at the first time and the first amplitude peak at the second time is greater than zero, the container may be determined to be emptying. For example, if the difference of the first amplitude peak at the first time and the first amplitude peak at the second time is not greater than zero, the container may be determined to be filling.

Example embodiments of the methods described herein may include transmitting, based on determining that the container is emptying, a signal that indicates to a controller to stop emptying the container. Example embodiments of the methods described herein may include transmitting, based on determining that the container is filling, a signal that indicates to a controller to stop filling the container. For example, prevention of over-filling, under-filling, over-emptying, and/or under-emptying of containers may be achieved by the transmission of the signal indicating to stop filling and/or emptying the container.

In some examples, the determining whether the absolute value of the difference of the first amplitude peak at the first time and the first amplitude peak at the second time is greater than one half of the first amplitude peak at the first time comprises determining whether a state of the material is changing. In some examples, the determining presence of the material in the container comprises determining whether the material is present or absent. In some examples, the determining that the container is emptying comprises determining the direction of the material relative to the container. Example embodiments of the methods described herein may include determining that the container is filling. In some examples, transmitting the signal indicating to stop emptying the container further comprises transmitting a signal indicating to stop filling the container.

Example embodiments of the devices described herein may include a housing, a force sensor comprising a substantially spherical component protruding through an opening of the housing (wherein, in some examples, the force sensor is mechanically coupled to the housing), a force pulse generator disposed axially from the force sensor and configured to impinge a force pulse of a chosen force and pulse width onto a surface of a container (wherein the force pulse generator is mechanically coupled to the housing), and/or a printed circuit board assembly (PCBA) (wherein the PCBA is mechanically coupled to the housing). The housing may be comprised of a plastic material. The force sensor may be soldered to the PCBA. The force pulse generator may be comprised of an electromagnetic device and/or a piezoelectric device. The force pulse generator may be coupled to the PCBA via soldered leads. The PCBA may comprise a pulse generator configured to drive a piezoelectric device and/or electromagnetic solenoid, an amplifier configured to read incoming signals, a micro-controller unit (MCU) configured to process the incoming signals and determine a level and/or direction of a material, and/or a switch configured to communicate the level and the direction of the material.

Example embodiments of the systems described herein may include a container for a material (e.g., fluids, solids, granules, powders, and/or other materials). Example embodiments of the systems described herein may include a level switch (e.g., a sensor that detects the presence of liquids, powder, or granulated materials at a specific location) coupled to the container. In some examples, the level switch comprises a housing, a force sensor comprising a substantially spherical component protruding through an opening of the housing (wherein the force sensor is mechanically coupled to the housing), a force pulse generator disposed axially from the force sensor and configured to impinge a force pulse of a chosen force and pulse width onto a surface of a container (wherein the force pulse generator is mechanically coupled to the housing), and/or a printed circuit board assembly (PCBA) (wherein the PCBA is mechanically coupled to the housing). The level switch may be coupled to the container on a side of the container opposite the material. The housing may be comprised of a plastic material. The force sensor may be soldered to the PCBA. The force pulse generator may be comprised of an electromagnetic device and/or a piezoelectric device. The force pulse generator may be coupled to the PCBA via soldered leads. The PCBA may comprise a pulse generator configured to drive a piezoelectric device and/or electromagnetic solenoid, an amplifier configured to read incoming signals, a micro-controller unit (MCU) configured to process the incoming signals and determine a level and/or direction of a material, and/or a switch configured to communicate the level and the direction of the material. The level switch may be coupled to the container via an adhesive material. The level switch may be coupled to the container via one or more fasteners. Example embodiments of the systems described herein may include a gel disposed between the level switch and the container.

Example embodiments of the present disclosure, in some examples, provide for level switches. In some examples, such level switches, in some examples, include no moving parts. Example embodiments of the present disclosure, in some examples, provide for level switches that can operate in wide temperature ranges and/or in harsh environments. Example embodiments of the present disclosure, in some examples, provide for level switches to detect, respond to, and/or control levels and/or overfilling of various media, such as fluids, solids, powders, granules, and/or other materials. Example embodiments of the present disclosure, in some examples, provide for a force pulse generator (e.g., such as a piezoelectric actuator and/or a miniature solenoid) impinging a force pulse of a predetermined force and pulse width to an outer wall of a container, wherein the outer wall of the container may be a side of the container opposite the material being measured.

Example embodiments of the present disclosure, in some examples, provide for detection of a medium at the level of the level switch (e.g., the height of the level switch on the container wall, wherein the level switch is coupled to the outer wall of the container) via calculating the relative difference between two successive measurements of damped pulse amplitude.

Example embodiments of the present disclosure, in some examples, provide for a level switch comprising a force sensor and a force pulse generator which are axially aligned within a housing. In some examples, the distance between the force sensor and the force pulse generator (e.g., the separation between the components) contributes to determining accuracy and/or resolution of the level of the medium being measured, as the relative strength of the damped force pulse along the wall of the container depends, at least in part, on the separation. In some examples, the distance between the force sensor and the force pulse generator may be determined by fluid surface flatness in the container. For example, hydrocarbons (e.g., gasoline, diesel, and/or the like) contained in the container may be relatively flat, so distance between the force sensor and the force pulse generator may range from 0 mm - 10 mm (e.g., more preferably 3 mm - 7 mm, preferably 5 mm). For example, if the container contains granules, the distance between the force sensor and the force pulse generator may range from 10 mm - 20 mm (e.g., more preferably 15 mm), depending on the average size of the granules. The greater the distance between the force sensor and the force pulse generator, the larger the force pulse magnitude may be to facilitate a detectable damped signal signature by the force sensor.

Example embodiments of the present disclosure, in some examples, provide for measurement of two amplitude peaks of a damped pulse signal (e.g., a signal damped by contact with a material) to determine the presence, level, and/or direction of the medium with increased measurement confidence. In some examples, the second peak extracted at a damping time may be configurable based on container material and/or density of the medium.

Example embodiments of the present disclosure, in some examples, provide for detection of the direction of the medium (e.g., whether the container is "filling" or "emptying") via calculating the sign of the difference of two successive measurements of damped pulse amplitude. In some examples, a positive sign indicates that the container is emptying and/or a negative sign indicates that the container is filling.

Example embodiments of the present disclosure, in some examples, provide for the ability to determine the level of a fluid (e.g., while disregarding the level of a foam of the fluid). In some examples, the level of the fluid is determined by comparing the density of the fluid to the density of the foam (e.g., foam may have a lower density than the fluid).

Example embodiments of the present disclosure, in some examples, provide for the ability to modulate force pulse strength with a low frequency and apply signal processing to extract damping frequency in order to detect the presence, level, and/or direction of a medium.

As described herein, embodiments of the present disclosure, in some examples, provide methods, devices, and/or systems comprising non-contact level switches, such as in industrial tanks.

To address challenges and limitations associated with devices for determining the level and/or direction of various media, various examples of the present disclosure may be provided. For example, various examples of the present disclosure may provide example devices for determining the level and/or direction of various media, associated sensors, and associated methods.

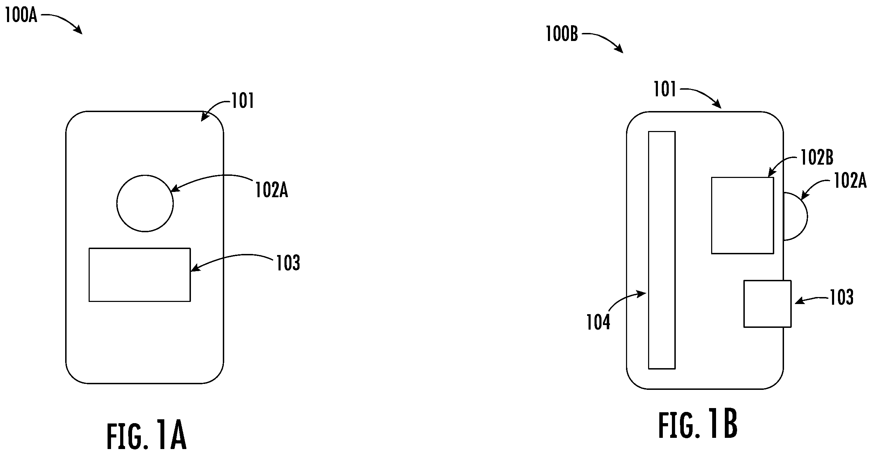

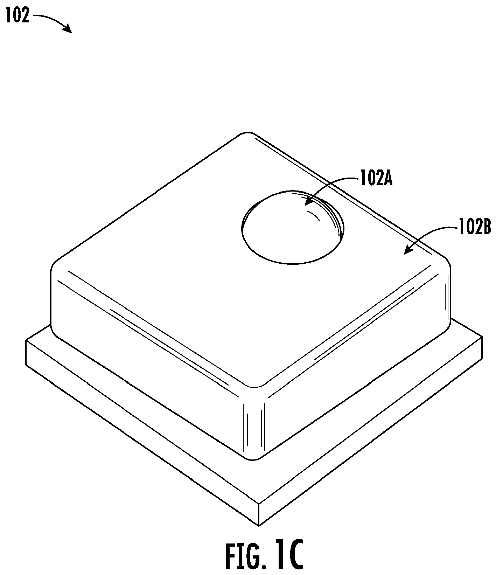

FIGS. 1A-1C provide an example level switch. Referring now to FIG. 1A, a front view 100A of a level switch is provided. The view 100A shows a housing 101, a substantially spherical component 102A (of a force sensor 102, which will be described with respect to FIG. 1C), and a force pulse generator 103. The housing 101 may be comprised of a plastic material and/or other materials. The housing 101 may comprise the substantially spherical component 102A, which may protrude past an opening of the housing 101. The substantially spherical component 102A may be, for example, a steel ball. The spherical component 102A may be mechanically coupled to the force sensor 102. The force sensor 102 may be mechanically coupled to the housing 101. The force pulse generator 103 may be mechanically coupled to the housing 101.

Referring now to FIG. 1B, a cross-sectional view 100B of the non-contact level switch of FIG. 1A is provided. The view 100B shows the housing 101, the substantially spherical component 102A, a force sensing element 102B (of a force sensor 102, which will be described with respect to FIG. 1C), the force pulse generator 103, and a printed circuit board assembly (PCBA) 104. The housing 101 may comprise the force sensing element 102B. The force sensing element 102B may be mechanically coupled to the housing 101. The force sensing element 102B may be mechanically coupled to the substantially spherical component 102A. The force sensing element 102B and/or the force pulse generator 103 may be soldered to the PCBA 104. For example, the force sensing element 102B and/or the force pulse generator 103 may be coupled to the PCBA 104 via soldered leads. The force pulse generator 103 may be comprised of an electromagnetic device and/or a piezoelectric device.

The PCBA 104 may comprise various electronics. For example, the PCBA 104 may comprise a pulse generator configured to drive a piezoelectric device and/or electromagnetic solenoid, an amplifier configured to read incoming signals, a micro-controller unit (MCU) configured to process the incoming signals and determine a level and/or direction of a material, and/or a switch (e.g., a relay and/or a solid-state switch) configured to communicate the level and the direction of the material.

Referring now to FIG. 1C, a perspective view of a force sensor 102 is provided. The force sensor 102 may be comprised of a substantially spherical component 102A and a force sensing element 102B. The substantially spherical component 102A may be mechanically coupled to the force sensing element 102B. The substantially spherical component 102A may act as high pass filter to couple a received damped pulse to the force sensing element 102B (e.g., a silicon micromachined sensing element) of the force sensor 102. Such an arrangement may provide direct coupling of a force pulse and provide sufficient mechanical isolation to the sensing element within a package of the force sensor 102.

A package comprising the force sensor 102 may further comprise a substrate (e.g., the PCBA 104) defining a vent hole, a mounting surface defining a space for the vent hole, a sense die (e.g., the force sensing element 102B), a sensor housing (e.g., the housing 101), a spherical component (e.g., the substantially spherical component 102A), among other elements. The force sensor 102 may be soldered to the PCBA 104. For example, the force sensor 102 may be coupled to the PCBA 104 via soldered leads.

Referring now to FIGS. 1A-1C, an assembled enclosure comprising the housing 101, comprising one or more force sensors 102 disposed in alignment with the force pulse generator 103, is provided. In some embodiments, the force pulse generator 103 provides a force pulse (e.g., mechanical tapping) to a wall (e.g., a side) of a container comprising a material to be measured. The one or more force sensors 102 and/or the force pulse generator 103 may be in contact with an outer wall of the container. For example, the one or more force sensors 102 and/or the force pulse generator 103 may be in contact with a side of the container opposite the material being measured. The assembled enclosure may comprise provisions to couple to the outer wall of the container. For example, the assembled enclosure may be coupled to the outer wall of the tank via one or more magnetic pads, one or more adhesive materials, and/or one or more fasteners. In some embodiments, a matching layer (e.g., comprised of Teflon, polyvinyl chloride (PVC), gel, and/or other materials) may cover the one or more force sensors 102 and/or the force pulse generator 103, which may facilitate proper contact with the outer wall of the container and/or good coupling of ultrasonic pulse energy. The matching layer may minimize the loss of a coupled force pulse by balancing acoustic impedance between the force pulse generator and an external wall of the container. The matching layer may have a thickness ranging from 1 micron - 200 microns (e.g., preferably 10 microns - 100 microns).

In some embodiments, the distance between the one or more force sensors 102 and/or the force pulse generator 103 is configurable based on application needs. In some examples, the distance between the force sensor 102 and the force pulse generator 103 may be determined by fluid surface flatness in the container. For example, hydrocarbons (e.g., gasoline, diesel, and/or the like) contained in the container may be relatively flat, so distance between the force sensor 102 and the force pulse generator 103 may range from 0 mm - 10 mm (e.g., more preferably 3 mm - 7 mm, preferably 5 mm). For example, if the container contains granules, the distance between the force sensor 102 and the force pulse generator 103 may range from 10 mm - 20 mm (e.g., more preferably 15 mm), depending on the average size of the granules. The greater the distance between the force sensor 102 and the force pulse generator 103, the larger the force pulse magnitude may be to facilitate a detectable damped signal signature by the force sensor. The assembled enclosure may be variously sized, for example, the assembled enclosure may be on the order of 50 mm by 50 mm by 20 mm (length by width by thickness).

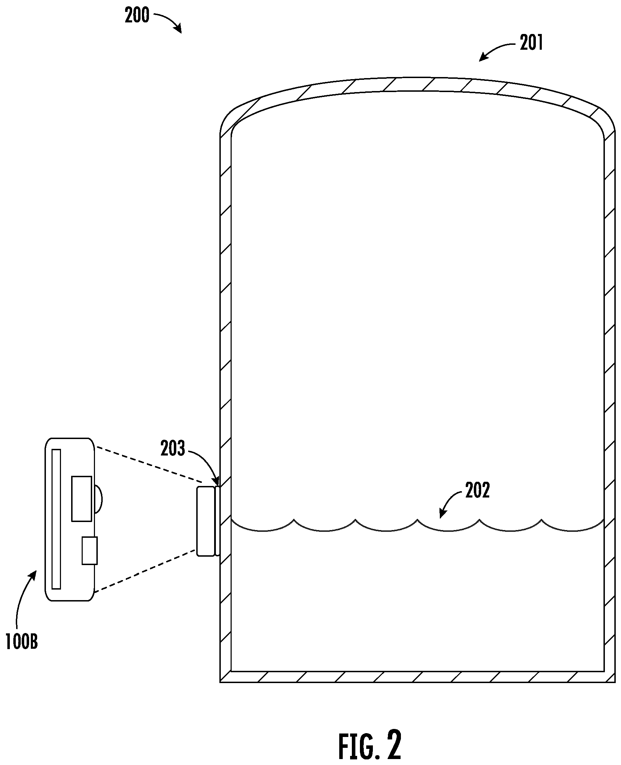

Referring now to FIG. 2, a cross-sectional view 200 of a container with a non-contact level switch (e.g., the level switch of FIGS. 1A-1C) is provided. The view 200 shows a container 201, a medium 202, a coupling layer 203, and the view 100B of the level switch. In some embodiments, the medium 202 is housed by the container 201. The container 201 may be comprised of plastic, metal, and/or other materials. The medium 202 may be a fluid, solid, powder, granule, and/or other medium. The level switch shown by view 100B may be used to measure properties and/or characteristics of the medium 202. For example, the level switch shown by view 100B may be used to measure the level, presence, direction, and/or other characteristics of the medium 202. The coupling layer 203 may be comprised of Teflon, PVC, gel, and/or other materials. The coupling layer 203 may be adhesively coupled to the container 201 and/or to the level switch shown by view 100B.

In some embodiments, a system may include the container 201 for the medium 202. In some embodiments, a system may include a level switch (e.g., such as the level switch shown by the view 100B) coupled to the container 201. In some examples, in order to couple the level switch shown by the view 100B to the container 201, the surface of the wall of the container 201 may be cleaned, a thin sheet of coupling material (e.g., a gel) may be coupled to the wall of the container 201, and/or the assembled level switch may be placed proximate to the coupling material and coupled to the wall of the container 201 via an adhesive material (e.g., an industrial grade adhesive), one or more fasteners, and/or one or more magnetic components.

In some examples, the level switch (e.g., such as the level switch shown by the view 100B) comprises the housing 101 for the force sensor 102 and/or the force pulse generator 103, the force sensor 102 (wherein the force sensor is mounted in the housing), the force pulse generator 103 (wherein the force pulse generator is mounted in the housing), and/or the PCBA 104 (wherein the PCBA is comprised within the housing). The level switch (e.g., such as the level switch shown by the view 100B) may be coupled to the container 201 on a side of the container opposite the medium 202. The housing 101 may be comprised of a plastic material. The force sensor 102 may be soldered to the PCBA 104. The force pulse generator 103 may be comprised of an electromagnetic device and/or a piezoelectric device. The force pulse generator 103 may be coupled to the PCBA 104 via soldered leads. The PCBA may comprise a pulse generator configured to drive a piezoelectric device and/or electromagnetic solenoid, an amplifier configured to read incoming signals, a micro-controller unit (MCU) configured to process the incoming signals and determine a level and/or direction of a material, and/or a switch configured to communicate the level and the direction of the material. The level switch may be coupled to the container via an adhesive material. The level switch may be coupled to the container via one or more fasteners. In some embodiments, the coupling layer 203 is disposed between the level switch (e.g., such as the level switch shown by the view 100B) and the container 201.

In some embodiments, the level switch (e.g., such as the level switch shown by the view 100B) may be coupled to an outer wall of the container 201. For example, the level switch (e.g., such as the level switch shown by the view 100B) may be coupled to a wall and/or side of the container 201 opposite the medium 202. In some embodiments, the level switch (e.g., such as the level switch shown by the view 100B) may be coupled to the container 201 at a predetermined location, as needed for applications.

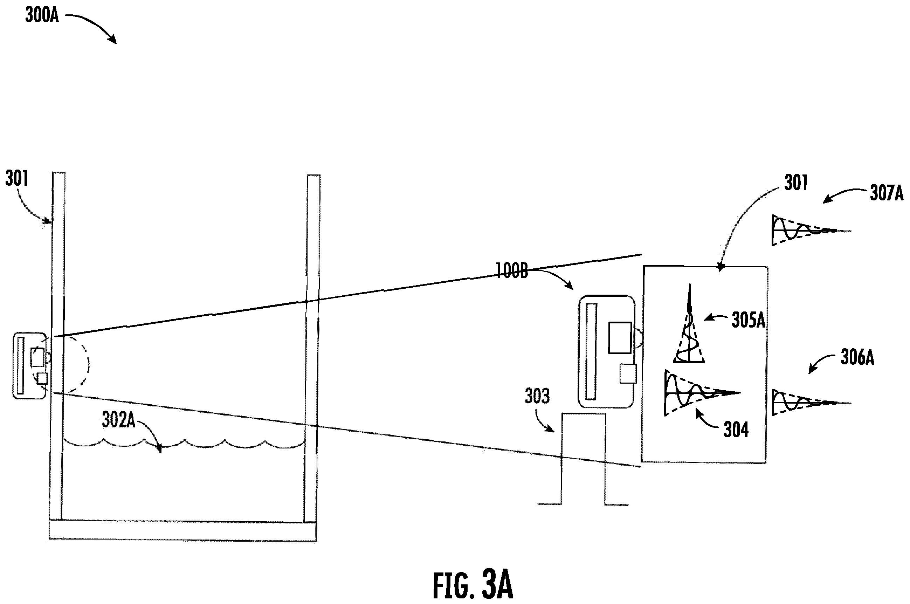

Referring now to FIG. 3A, a cross-sectional view 300A of a first partially filed container with a non-contact level switch and a blown-up view of their interface is provided. The cross-sectional view 300A shows a first partially filled container 301 housing a medium 302A. The cross-sectional view 300A shows the level switch of view 100B. In some examples, the medium 302A does not reach the height at which the level switch of 100B is coupled to the container 301. The cross-sectional view 300A shows a blown-up view of an interface between the level switch of 100B and an outer wall of the container 301. Near the interface in view 300A, a force pulse 303 is shown. The force pulse 303 may be generated by the force pulse generator 103. The force pulse 303 may be of a predetermined width.

The force pulse generator 103 may emit a pulse of acoustic energy (e.g., similar to a mechanical tapping on the outer wall of the container 301). For example, the pulse may be of a duration on the order of a few milliseconds. The emitted pulse may be coupled to the container's outer wall via the coupling layer 203. The coupled pulse may propagate through the material of the container 301 in directions substantially perpendicular (pulse 305A) and/or substantially parallel (pulse 304) to the plane of the force pulse generator 103. A damped pulse (pulse 307A) with a relative amplitude lower than the pulse 304 is shown as a representative signal visualization. The impinged force pulse from the force pulse generator 103 may be propagated substantially perpendicularly to the force pulse generator 103, through the container 301 wall thickness, and released into the medium 302A that is in contact with an inner wall of the container 301, as shown by pulse 306A. In some examples, the pulse 306A may be released into air and/or vacuum if the medium 302A does not reach the height of the level switch.

The coupling layer 203 may affect the propagation of the force pulse from the force pulse generator 103 to the container 301. For example, a high density coupling layer may couple most of the force into the container 301, whereas a low density coupling layer such as air may not couple most of the force into the container 301. In some examples, the amplitude of the damped pulse into air may be relatively small. In some examples, the remaining force pulse energy may spread along the walls of the container 301. In some examples, the force sensor 102 may receive a relatively stronger damped force pulse.

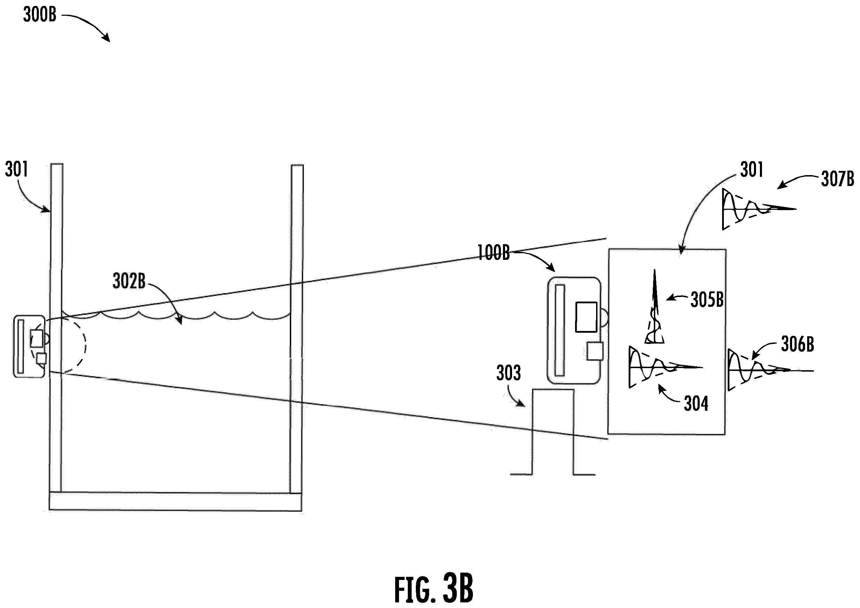

Referring now to FIG. 3B, a cross-sectional view 300B of a second partially filled container with a non-contact level switch and a blown-up view of their interface is provided. The cross-sectional view 300B shows a second partially filled container 301 housing a medium 302B. The cross-sectional view 300B shows the level switch of view 100B. In some examples, the medium 302B reaches the height at which the level switch of 100B is coupled to the container 301. The cross-sectional view 300B shows a blown-up view of an interface between the level switch of 100B and an outer wall of the container 301. Near the interface in view 300B, a force pulse 303 is shown. The force pulse 303 may be generated by the force pulse generator 103. The force pulse 303 may be of a predetermined width.

The force pulse generator 103 may emit a pulse of acoustic energy (e.g., similar to a mechanical tapping on the outer wall of the container 301). For example, the pulse may be of a duration on the order of a few milliseconds. The emitted pulse may be coupled to the container's outer wall via the coupling layer 203. The coupled pulse may propagate through the material of the container 301 in directions substantially perpendicular (pulse 305B) and/or substantially parallel (pulse 304) to the plane of the force pulse generator 103. A damped pulse (pulse 307B) with a relative amplitude greater than the pulse 304 is shown as a representative signal visualization. The impinged force pulse from the force pulse generator 103 may be propagated substantially perpendicularly to the force pulse generator 103, through the container 301 wall thickness, and released into the medium 302B that is in contact with an inner wall of the container 301, as shown by pulse 306B.

In some embodiments, when the medium 302B is present inside the container 301 at the level of the force pulse generator 103, the impinged force pulse may be further propagated through the container and into the medium 302B, which may result in reducing the amplitude (and/or other characteristics) of the pulse propagating parallel to the plane of the force pulse generator 103. In some embodiments, most of the energy from the force pulse may be coupled into the medium 302B, for example, if the medium 302B is at or above the level of the force pulse generator 103, which may result in a damped force pulse being received by the force sensor 102. The difference in the amplitude of the damped pulse as well as the damping time between conditions of presence or absence of the medium 302B (and/or similarly 302A) at the level of the force pulse generator 103 may provide information indicating the level of the medium (302B and/or 302A) in the container 301.

Referring now to FIGS. 3A-3B, the extent of the coupling of the pulse with the media 302A and/or 302B may depend of the density of the media 302A and/or 302B; the horizontal damped pulse amplitude may be accordingly reduced.

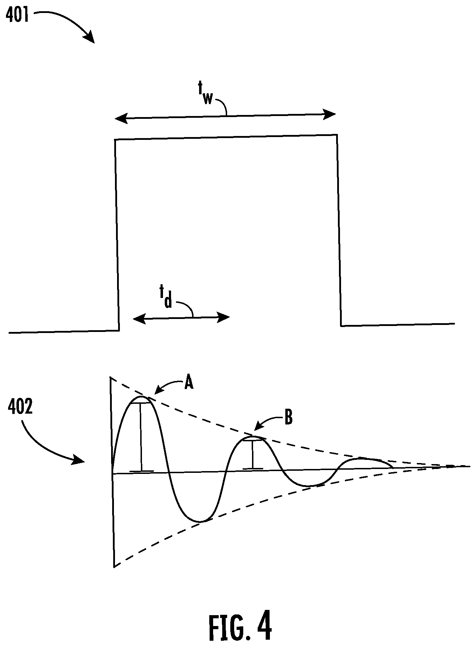

Referring now to FIG. 4, example views of a force pulse and a damped force pulse are provided. FIG. 4 shows a force pulse 401 and a damped force pulse 402. In order to determine the presence, level, and/or direction of a medium, two damped pulse peaks are extracted: at a first amplitude *A* and a second amplitude *B.* The second amplitude *B* may be captured at a configurable time parameter, referred to as "damping time", *t_{d}* = *t_{w}*/5, where *t_{w}* is the pulse width. The magnitudes of *t_{d}* and *t_{w}* in FIG. 4 may not be drawn to scale. Extracting two peaks may enhance detection confidence and decrease the effect of noise present in the measurements.

In order to determine whether the medium is present or absent, specific conditions may be met by force pulses measured at two successive times: *t* and *t* - 1. For example, the medium may be determined to be present (e.g., the container may be considered "filled") if *Aₜ < A*_{*t*-1} and *Bₜ < B*_{*t*-1}*.* For example, the medium may be determined to be absent (e.g., the container may be considered "empty") if *Aₜ > A*_{*t*-1} and *Bₜ > B*_{*t*-1}*.*

In order to determine the direction of the medium (e.g., whether the container is "filling" or "emptying"), specific conditions may be met by force pulses at two successive times: *t* and *t* - 1. A higher peak may indicate that the container is "empty" (e.g., or partially filled). A lower peak may indicate that the container is "filled" (e.g., or partially filled). A first condition may be determining whether |*Aₜ - A*_{*t*-1}| *> Aₜ*/2*.* A second condition may be determining the sign of *Aₜ - A*_{*t*-1}.

In an example, it may be determined that the container is "empty" at the switch level (e.g., the medium does not reach the height of the level switch on the container wall) during two successive sampling points. Suppose an example amplitude of 5 indicates a strong peak and an example amplitude of 1 indicates a weak amplitude, in an example. Suppose *Aₜ* = 5.2 and *A*_{*t*-1} = 5.1, in an example. Then, for example, the first condition gives |*Aₜ - A*_{*t*-1}| = 15.2 - 5.1| = 0.1 and 0.1 ≯ *Aₜ*/2*.* Therefore, in an example, the first condition is not met, indicating that there has been no change of state (e.g., the state of being "empty" or at the level of the level switch). Thus, the state of "empty" is sustained. The second condition is not checked, in some examples.

In an example, it may be determined that the container is "filling", wherein the medium crosses the level of the level switch during two successive sampling points. Suppose an example amplitude of 5 indicates a strong peak and an example amplitude of 1 indicates a weak amplitude, in an example. Suppose *Aₜ* = 1 and *A*_{*t*-1} *=* 5, in an example. Then, for example, the first condition gives |*Aₜ - A*_{*t-*1}| = |1 - 5| = 4 and 4 *> Aₜ*/2*.* Therefore, the first condition is met, indicating that there is a change of state. Then, the second condition gives *Aₜ - A*_{*t*-1} = 1 - 5 = -4, which is negative. Thus, the container is determined to be "filling".

In an example, it may be determined that the container is "filled" at the switch level (e.g., the medium reaches the height of the level switch on the container wall) during two successive sampling points. Suppose an example amplitude of 5 indicates a strong peak and an example amplitude of 1 indicates a weak amplitude, in an example. Suppose *Aₜ* = 1 and *A*_{*t*-1} = 1.1, in an example. Then, for example, the first condition gives |*Aₜ - A*_{*t*-1}| = |1 - 1.1| = 0.1 and 0.1 ≯ *Aₜ*/2*.* Therefore, in an example, the first condition is not met, indicating that there has been no change of state (e.g., the state of being "full" at the level of the level switch). Thus, the state of "full" is sustained. The second condition is not checked, in some examples.

In an example, it may be determined that the container is "emptying", wherein the medium crosses the level of the level switch during two successive sampling points. Suppose an example amplitude of 5 indicates a strong peak and an example amplitude of 1 indicates a weak amplitude, in an example. Suppose *Aₜ* = 5 and *A*_{*t*-1} = 1.9, in an example. Then, for example, the first condition gives |*Aₜ - A*_{*t*-1}| = |5 - 1.9| = 3.1 and 3.1 *> Aₜ*/2*.* Therefore, the first condition is met, indicating that there is a change of state. Then, the second condition gives *Aₜ - A*_{*t*-1} = 5 - 1.9 = 3.1, which is positive. Thus, the container is determined to be "emptying".

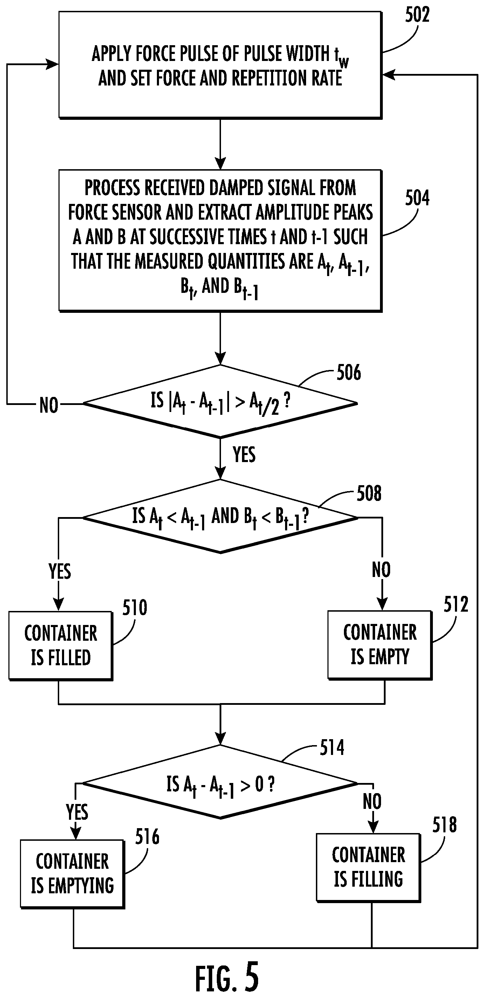

Referring now to FIG. 5, an example flowchart illustrating an example method of determining level and direction of a material in a container is provided. A level switch such as the level switch of view 100B may implement the steps/operations described herein.

At step/operation 502, a force pulse of pulse width *t_{w}* is applied. For example, the force pulse may be applied by the force pulse generator 103 to the container 201/301. The force pulse generator 103 may be a piezoelectric bar and/or disk excited by a voltage pulse to exert an amount of force. Additionally or alternatively, the force pulse generator 103 may be a solenoid configured to exert an amount of force by making a plunger travel a predetermined distance (e.g., 0.1 - 0.3 mm, 0.3 mm or less, 0.1 mm or more, etc.). The solenoid may have a length of approximately 10 mm - 20 mm (e.g., preferably 15 mm) and a diameter of approximately 1 mm - 15 mm (e.g., more preferably 5 mm - 10 mm, preferably 7.5 mm). A pulse generator configured to drive piezoelectric device and/or an electromagnetic solenoid may apply the force pulse. At step/operation 502, the force (e.g., in Newtons) and repetition rate (e.g., in seconds⁻¹) of the force pulses may be set. The force pulse strength and/or the force pulse width may be configurable parameters, for example, based on container wall thickness, container wall material, and/or density of the medium being measured. The force pulse repetition rate may be configurable, for example, to improve detection confidence. For example, the force and repetition rate may be set by the pulse generator. In some examples, the pulse width may be configured to be larger for a container comprised of plastic. In some examples, the pulse width may be configured to be smaller for a container comprised of metal. The force pulse amplitude may be a configurable parameter, to suit application needs (e.g., based on container material, container wall thickness, and/or density of the medium to be measured), in some examples.

At step/operation 504, damped signals received by a force sensor may be processed, and/or amplitude peaks *A* and *B* may be extracted at successive times *t* and *t* - 1, such that the measured quantities are *Aₜ, A*_{*t*-1}, *Bₜ,* and *B*_{*t*-1}*.* In some examples, the quantities are measured multiple times (e.g., *n* times) in order to average out the level detection. The amount of times the measurements are taken n may be configured to suit application needs. In some examples, the damped signals may be received by the force sensor 102. For example, an amplifier may read the received damped signals. For example, a processing unit (e.g., a processor, a micro controller unit (MCU), etc.) may process the incoming signals and determine the presence, level, and/or direction of a medium being measured.

At step/operation 506, a determination may be made as to whether |*Aₜ - A*_{*t*-1}| is greater than *Aₜ*/2*.* In the case of a "no" determination, step/operation 502 may be implemented. In the case of a "yes" determination, step/operation 508 may be implemented. For example, an MCU may process the incoming signals and determine the presence, level, and/or direction of a medium being measured.

At step/operation 508, a determination may be made as to whether *Aₜ < A*_{*t*-1} and *Bₜ < B*_{*t*-1}*.* In the case of a "yes" determination, at step 510, the container is determined to be "filled" (wherein "filled" indicates that the medium being measured reaches the height of the level switch on the container wall). In the case of a "no" determination, at step 512, the container is determined to be "empty" (wherein "empty" indicates that the medium being measured does not reach the height of the level switch on the container wall). For example, a processing unit may process the incoming signals and determine the presence, level, and/or direction of a medium being measured.

At step/operation 514, a determination may be made as to whether *Aₜ - A*_{*t*-1} is greater than zero. In the case of a "yes" determination, at step 516, the container is determined to be "emptying" (wherein "emptying" indicates that the level of the medium started at or above the height of the level switch and crossed to at or below the height of the level switch during two successive measurements). In the case of a "no" determination, at step 518, the container is determined to be "filling" (wherein "filling" indicates that the level of the medium started at or below the height of the level switch and crossed to at or above the height of the level switch during two successive measurements). For example, a processing unit may process the incoming signals and determine the presence, level, and/or direction of a medium being measured. For example, the processing unit may transmit at least one signal indicating the presence, level, and/or direction of the medium being measured. For example, the processing unit may transmit at least one signal indicating that the container comprising the medium is filling, emptying, or neither.

The determined presence, level, and/or direction of the medium may be communicated and/or transmitted via analog and/or digital input/output (I/O) links. A switch (e.g., a relay and/or a solid-state switch) may actuate a control action, for example, of a controller based on the determined presence, level, and/or direction of the medium. The controller may receive the at least one signal indicating the presence, level, and/or direction of the medium from the processing unit. For example, the controller may receive the at least one signal indicating that the container comprising the medium is filling, emptying, or neither. Based on receiving the at least one signal indicating the presence, level, and/or direction of the medium, the controller may stop filling the container, stop emptying the container, or neither. For example, upon receiving (e.g., by a power switching unit of a motor pump) a signal indicating a level of the medium, the switch may activate either a "power ON" state or a "power OFF" state based on pre-determined states, as per application. For example, if an application relies on maintaining a medium at a predetermined level, the motor pump may be actuated accordingly to either stop filling, stop emptying, begin filling, and/or begin emptying, as communicated by a sensor controller.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A method for detecting presence and direction of a material, the method comprising:
applying a force pulse of a force and pulse width to a surface of a container;
processing a damped signal detected by a force sensor in response to the force pulse, wherein the processing comprises extracting a first amplitude peak and a second amplitude peak, the first amplitude peak corresponding to a first time and a second time, and the second amplitude peak corresponding to the first time and the second time;
determining whether an absolute value of a difference of the first amplitude peak at the first time and the first amplitude peak at the second time is greater than one half of the first amplitude peak at the first time;
determining, based on the first amplitude peak at the first time being less than the first amplitude peak at the second time and based on the second amplitude peak at the first time being less than the second amplitude peak at the second time, presence of the material in the container;
determining, based on the difference of the first amplitude peak at the first time and the first amplitude peak at the second time being greater than zero, that the container is emptying; and
transmitting, based on determining that the container is emptying, a signal indicating that the container is emptying.

2. The method of claim 1, wherein the determining whether the absolute value of the difference of the first amplitude peak at the first time and the first amplitude peak at the second time is greater than one half of the first amplitude peak at the first time comprises determining whether a state of the material is changing.

3. The method of any of claims 1 or 2, wherein the determining presence of the material in the container comprises determining whether the material is present or absent.

4. The method of any of claims 1 to 3, wherein the determining that the container is emptying comprises determining the direction of the material relative to the container.

5. The method of any of claims 1 to 4, further comprising determining that the container is filling.

6. The method of any of claims 1 to 5, further comprising:
determining, based on the difference of the first amplitude peak at the first time and the first amplitude peak at the second time not being greater than zero, that the container is filling; and
transmitting, based on determining that the container is filling, a signal indicating that the container is filling.

7. A system comprising:
a container for a material; and
a level switch coupled to the container, the level switch comprising:
a housing;
a force sensor mechanically coupled to the housing, the force sensor comprising a substantially spherical component protruding through an opening of the housing;
a force pulse generator, wherein the force pulse generator is mechanically coupled to the housing and disposed axially from the force sensor, wherein the force pulse generator is configured to impinge a force pulse of a chosen force and pulse width onto a surface of a container; and
a printed circuit board assembly (PCBA), wherein the PCBA is mechanically coupled to the housing.

8. The system of claim 7, wherein the level switch is coupled to the container on a side of the container opposite the material.

9. The system of any of claims 7 or 8, wherein the force sensor is soldered to the PCBA.

10. The system of any of claims 7 to 9, wherein the force pulse generator is comprised of at least one of:
an electromagnetic device; or
a piezoelectric device.

11. The system of any of claims 7 to 10, wherein the force pulse generator is coupled to the PCBA via soldered leads.

12. The system of any of claims 7 to 11, wherein the PCBA comprises:
a pulse generator configured to drive a piezoelectric device or electromagnetic solenoid;
an amplifier configured to read incoming signals;
a processing unit configured to process the incoming signals and determine a level and direction of a material; and
a switch configured to communicate the level and the direction of the material.

13. The system of any of claims 7 to 12, wherein the level switch is coupled to the container via an adhesive material.

14. The system of any of claims 7 to 13, wherein the level switch is coupled to the container via one or more fasteners.

15. The system of any of claims 7 to 14, further comprising a gel disposed between the level switch and the container.
